# EUROPEAN PATENT SPECIFICATION

(11) **EP 1 292 184 B1**
(45) Date of publication and mention of the grant of the patent: **16.02.2005**
(21) Application number: 01940489.6
(22) Date of filing: 16.05.2001
(51) Int. Cl.: A01K 29/00

(54) **NEW SCREENING TOOL FOR ANALYZING THE BEHAVIOR OF LABORATORY ANIMALS**
NEUE SCREENINGVORRICHTUNG ZUR ANALYSE DES VERHALTENS VON LABORTIEREN
NOUVEL OUTIL DE DEPISTAGE PERMETTANT D'ANALYSER LE COMPORTEMENT DES ANIMAUX DE LABORATOIRE

(30) Priority: 16.05.2000 EP 00110436
(43) Date of publication of application: 19.03.2003
(73) Proprietor: MAX-PLANCK-GESELLSCHAFT ZUR FÖRDERUNG DER WISSENSCHAFTEN E.V., 14195 Berlin (DE)
(72) Inventor: OHL, Frauke, 3951XW Maarn (NL)
(74) Representative: VOSSIUS & PARTNER
(86) International application number: PCT/EP2001/005605
(87) International publication number: WO 2001/087055

(56) References cited:
- EP-A- 0 363 755
- US-A- 4 574 734
- US-A- 5 247 901
- US-A- 5 320 064
- DATABASE BIOSIS [Online] BIOSCIENCES INFORMATION SERVICE, PHILADELPHIA, PA, US; 1996 BROSNAN-WATTERS G ET AL: "Acute behavioral effects of MK-801 in the mouse." Database accession no. PREV199698747762 XP002182882 & PHARMACOLOGY BIOCHEMISTRY AND BEHAVIOR, vol. 53, no. 3, 1996, pages 701-711, ISSN: 0091-3057
- DATABASE BIOSIS [Online] BIOSCIENCES INFORMATION SERVICE, PHILADELPHIA, PA, US; 1996 WOZNIAK D F ET AL: "MK-801 neurotoxicity in male mice: Histologic effects and chronic impairment in spatial learning." Database accession no. PREV199698699440 XP002182883 & BRAIN RESEARCH, vol. 707, no. 2, 1996, pages 165-179, ISSN: 0006-8993
- DATABASE BIOSIS [Online] BIOSCIENCES INFORMATION SERVICE, PHILADELPHIA, PA, US; 1995 VARNER JULIE A ET AL: "Acquisition and retention effects of ethylestrenol in a food-search task." Database accession no. PREV199598224157 XP002182884 & PSYCHOBIOLOGY, vol. 23, no. 1, 1995, pages 59-62, ISSN: 0889-6313

## Description

This invention relates to a screening tool which enables the investigator to test complex behavioral effects of pharmaceutical compounds and to behavioral test procedures for psychopharmacological animal models employing this screening tool.

The screening tool of the invention, a modified hole board, allows to differentially analyse the behavior in small laboratory animals, in particular rodents such as mice and rats, tree shrews (Tupaia belangeri) and small primates and to evaluate behavioral effects induced by pharmacological manipulation.
Furthermore, the screening tool according to the invention may also be used to evaluate the behavioral alteration induced by selective breeding or genetic manipulation of laboratory animal strains or evaluate learning and memory functions of laboratory animals and influences thereon by a drug.
A variety of test procedures are used in preclinical research on behavioral pharmacology (for review see Lister, 1990; Menard & Treit, 1999). Most of these procedures are considered to be predictive of one specific type of therapeutic activity, such as anxiolytic, sedative or antidepressant effects. In rodents, the most widely used animals in preclinical research, these effects can be assessed by behavioral alterations, for instance in anxiety-related behavior, risk assessment, locomotor activity, and exploration (Belzung & Le Pape, 1994; Escorihuela et al., 1999; for review see Rodgers, 1997).
To assess drug effects, tests of spontaneous unconditioned behavior are often used. In these tests locomotor behavior plays a crucial role and, thus, it seems to be difficult to reliably dissociate locomotion from indices of anxiety or exploration (Sheldon, 1968). To differentially investigate the behavioral effects of compounds, correlational models with behavioral data obtained from a whole series of different independent tests need to be performed (Treit, 1985). Thus, the evaluation of potential behavioral properties of pharmacologically active compounds is in need of a series of specific behavioral tests, resulting in cost-intensive and time-consuming procedures. Moreover, it has to be considered that an animal's behavior is context-specific and, therefore, the fact that a drug exerts an anxiolytic effect in one test-specific context does not necessarily imply that it will exert a similar effect in another context (for review see Lister, 1990). Studies based on behavioral tests which allow to investigate a wide range of behavioral forms and which are focussed on a more detailed ethological analysis of experimental animals in a single complex paradigm may overcome these disadvantages (Cruz et al., 1994; Rodgers et at., 1997).

In recent years, considerable progress has been made in fields such as combinatorial chemistry and the genomic based research, providing an immense number of new chemical entities with potential clinical use. There is thus a growing need for the pharmaceutical industry for a simple, fast throughput screening method which avoids the need of a complicated time-consuming battery of separate behavioral tests.

The present invention pertains to a modified hole board (mHB) paradigm which enables the investigator to perform complex ethological observations on unconditioned behavior in a single experimental setting. The mHB of the invention comprises the characteristics of the classical hole board, which is in particular used to evaluate drug effects on exploration and activity (File and Wardill, 1975a; Geyer, 1996), and the open field, which is used to investigate anxiety and locomotor activity (for review see Kelley, 1993). The mHB of the invention encompasses a hole board, originally designed to investigate exploration motivation and cognitive functions in tree shrews (Ohl et al., 1998; Ohl and Fuchs, 1999), and an open field, a test paradigm which is highly standardized to evaluate locomotor activity (for review see Kelley, 1993) adjacent to a compartment housing the laboratory animals.
Additionally, by allowing visual and olfactory contact among the animals to be tested, the mHB of the invention was designed such as to circumvent the stressful factor of social isolation during the test and to enable the assessment of the social affinity among group mates.

The screening tool according to the invention constitutes an arrangement for assessing the behavior of laboratory animals, comprising:
(a) a first compartment for housing a plurality of said laboratory animals;
(b) a second compartment for testing the behavior of one of said plurality of laboratory animals, wherein said second compartment is an open field and is located adjacent to said first compartment, wherein said first and second compartments are separated from each other by a partition which comprises at least one hole for fluid exchanged to allow visual and olfactory contact among the animals to be tested; and
(c) a hole board arranged in said second compartment.

In the following, a preferred embodiment of the present invention will be described with reference to the drawing, in which:

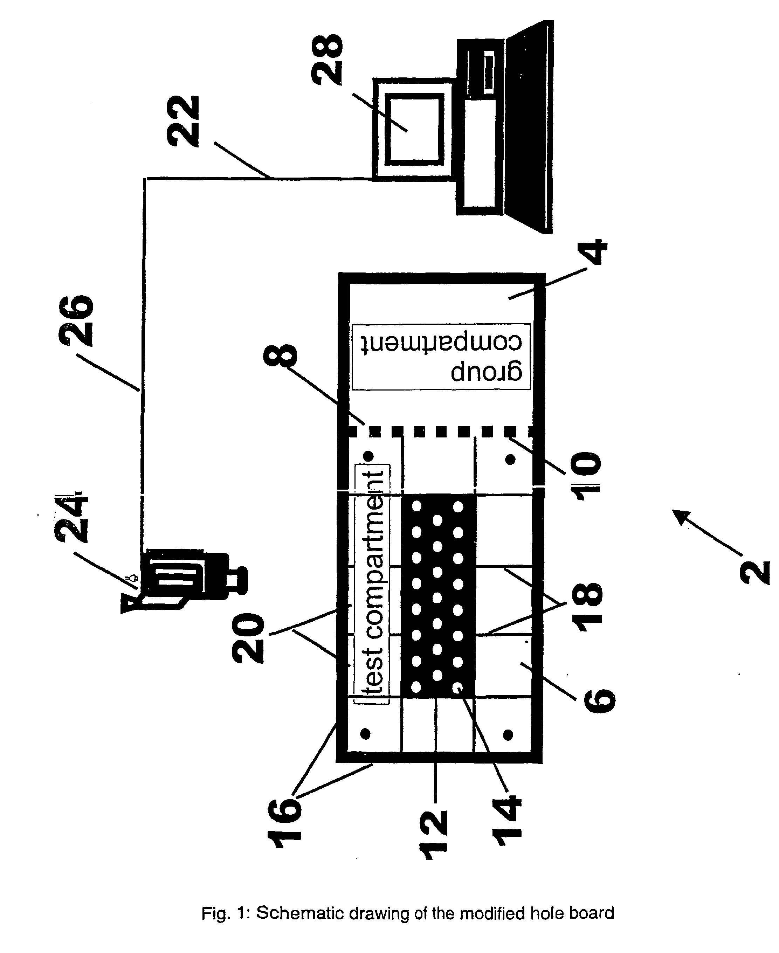

Fig. 1 systematically shows a preferred arrangement of the present invention.

The arrangement 2 shown in Fig. 1 essentially comprises a first compartment 4 for housing a plurality of laboratory animals. This first compartment 4 is also referred to as a group compartment. The arrangement 2 further comprises a second or test compartment 6 for testing the behavior of one of the plurality of laboratory animals housing in the first compartment 4. The test compartment 6 is located adjacent to the group compartment 4, wherein both compartments 4 and 6 are at least fluidly connected to one another. Preferably, the first and second compartments 4 and 6 are separated from each other by a partition 8 which comprises at least one hole 10 for a fluid exchange therethrough between the two compartments 4 and 6. According to the present invention, this is particularly advantageous because the one particular laboratory animal to be tested in the test compartment 6 can still be maintained in relatively close contact to its social group housing in the first or group compartment 4. The partition separating the first and second compartments 4 and 6 is preferably made of a transparent material, most preferably a transparent PVC material.

The second or test compartment 6 is provided in the form of an open field, wherein a hole board 12 is arranged in the field. The hole board 12 comprises a plurality of hoies 14 which are arranged in an array. In a preferred embodiment, the hole board 12 comprises at least one movable lid (not shown) covering a hole 14 of the hole board 12. The lid is adapted to be opened and/or closed by a test animal. Similarly, it is possible to provide a plurality or all of the holes 14 with a movable lid, optionally the lids may be fixed by a coil spring (Ohl F et al. (1998)), *J Neurosci Meth* **81:** 35-40). Preferably, the hole board 12 is arranged at a center position of the second compartment 6, i.e., equidistantly remote from compartment walls 16 surrounding the second compartment 6. In the region where the first and second compartments 4 and 6 contact each other the compartment wall 16 may be provided in the form of the partition 10. The hole board 12 and/or the second compartment 6 are preferably made of an opaque PVC material, preferably contrasting the colour of the animal to be tested.

The open field defined by the second compartment 6 is in accordance with a preferred embodiment of the present invention provided with a detectable marking 18 dividing the open field into a plurality of smaller fields 20. By means of these detectable markings 18, which are preferably formed as a plurality of lines dividing the open field into quadrants, the movement and thus the behavior of the tested laboratory animal can be more easily detected.

In one particularly preferred embodiment of the present invention the detection of the behavior of the tested laboratory animal is carried out by means 22 for automatically detecting the behavior of the animals. This automatic detection means 22 preferably comprises a video means or a video camera 24 which provides a continuous image of the open field of the second compartment 6, a signal line 26 and a control means, preferably in the form of a digital computer 28. According to this embodiment the continuously provided image generated by the video camera 24 is transferred via the signal line 26 to the digital computer 28 which is provided with an appropriate software for detecting or evaluating the behavior of the tested laboratory animal. The results of the evaluation provided by the digital computer 28 may be stored on a storage means (not shown) in the digital computer 28.

The arrangement 2 in accordance with the present invention is preferably adapted to the size of the respective laboratory animals to be used, wherein typically the first compartment 4 is about 50 cm long, 50 cm wide and 50 cm high, the second compartment 6 is about 100 cm long, 50 cm wide and 50 cm high, and the hole board 12 is preferably about 60 cm long, 20 cm wide and 2 cm high.

It is appreciated that also hole numbers and diameters will be adapted to the size of the respective laboratory animals to be used.

The experiments described below establish that the mHB is a reliable test for behavioral characterization in rodents like mice and rats (as well as in other small laboratory animals such as tree shrews and small primates) in a single experimental setting.

In the subsequent experiments, the validity of the mHB of the invention is established using HABs and LABs which are thought to differ in anxiety-related behavior but not in their basal locomotor activity. In these experiments, the behavioral consequences of acute treatment with diazepam, which represents a standard anxiolytic (for review see Lister, 1990), and chronic treatment with paroxetine, which is known as an antidepressant but also as an atypical anxiolytic (Griebel et al., 1999) is evaluated.

Since a drug's psychopharmacological efficacy is often not apparent in a population of normal volunteers (for review see Holsboer, 1995) is likely to also hold true for an unselected general population of laboratory animals (for review see Lister, 1990). Therefore, it may be more appropriate to investigate possible behavioral effects of potential anxiolytics in animal models of extreme innate emotionality (Liebsch et al., 1998b). Wistar rats, which fulfil this criterion on the elevated plus maze (EPM), have been selectively bred over the past decade (Liebsch et al. 1998a). In general, the line of high anxiety-related behavior rats (HABs) show an increased innate emotionality and more passive stress coping strategies than the line of low anxiety-related behavior rats (LABs) under stressful conditions (Liebsch et al., 1998b). Extensive studies, including pharmacological validation, have demonstrated that hyper-anxiety in HABs represents a robust trait, resembling psychiatric patients in many aspects (Keck et al., 1999; Landgraf et al., 1999; Liebsch et al., 1998b). Thus, HABs represent a unique animal model of innate anxiety with face and predictive validity.

### Experiments:

### Methods

### Animals

The selection and the breeding of both HABs and LABs have been previously described in detail by Liebsch et al. (1998a). Briefly, rats were kept and bred in the animal facilities of the Max Planck Institute under standard laboratory conditions (12:12 light:dark, lights on at 6:00, 22°C, 60 % humidity and free access to water and standard rat chow). Over the years HABs and LABs were treated identically in terms of care, mating, and behavioral testing. Animals used in the present experiments were adult male individuals (n=82; weight: 280-350) from the F10 generation. All rats were housed in groups of 3-5 individuals in standard rat cages.

For the mHB test, all individuals belonging to one social group (i.e. group mates) were placed in the group compartment. After 30 min of habituation all individuals were successively placed into the experimental box for 5 min each. All tests were videotaped and directly monitored by a trained observer blind to the rat line and treatment.
The following parameters were measured and assigned to different behavioral categories:
- % time on the board (% **time**), latency until the first board entry (**latency board**), and number of board entries (**entries on board**) indicate avoidance behavior towards an unprotected area (i.e. board), which is interpreted as 'anxiety';
- holes visited per minute on board **(holes explored),** rearings on the board **rearings board),** and rearings in the box **(rearings box)** indicate exploration-related behavior;
- stretched attends **(stretched attends)** represent risk assessment behavior;
- line crossings in the box **(line crossings)** indicate locomotor activity;
- latency until the first group contact **(latency group contact)** indicates the social affinity of the experimental animal towards its groups mates;
- latency until the first self-grooming (**latency groom**) and latency until the first defaecation (**latency defaecation**) indicate the physiological arousal.

### Experimental protocol

All experiments were carried out between 12:00 and 16:00. One week prior to behavioral testing animals were transferred to the testing room for habituation. For the diazepam experiment animals were i.p. injected with either 1mg/kg b.w. diazepam (Diazepam-Lipuro, Braun-Melsungen, Germany) or vehicle (Aqua ad iniectabilita, Braun-Melsungen, Germany) 30 minutes before testing.
The selective serotonin reuptake inhibitor paroxetine (SmithKline Beecham, Sussex, UK) was solved in water, filled into the regular water bottles and was given to the animals via their drinking water over 10 weeks (5mg/kg b.w.). The consumption of paroxetine solution was measured and the solution was renewed daily in the morning. The control group received normal drinking water. To allow for the control of the solution-intake, all animals of the paroxetine experiment had to be single-housed so that the social contact could not be assessed.

### Statistics

The behavioral data from the basal test in HABs and LABs were analyzed by an one-way analysis of variance (ANOVA; STATISTICA, StatSoft, Tulsa, USA) with rat lines as between-group factor. Vehicle-groups from the pharmacological experiments were also analyzed by a one-way ANOVA to control for reproducibility of potential behavioral line-differences in the mHB. Then, behavioral data from the pharmacological experiments were analyzed by a two-way ANOVA with genetic line and treatment as main factors. Analyses were followed by a post-hoc LSD test when appropriate. p<0.05 was accepted as significant. Data are presented as means ± SEM.

### Results

The comparison of the basal behavior of HABs and LABs revealed significant differences between the two rat lines in parameters which are thought to indicate anxiety (time on board: F(1,24)=49.7; p<0.001, latency board: F(1,24)=6.7; p<0.02, entries on board: F(1,24)=36.5; p<0.001). Furthermore, HABs compared with LABs performed more stretched attends (F(1,24)=84.0; p<0.001) and were less active in terms of locomotion (F(1,24)=11.3; p<0.003) and exploration of the unprotected area (i.e. board; rearings board: F(1,24)=11.6; p<0.003; holes explored: F(1,24)=14.2; p<0.001; latency hole: F(1,24)=6.6; p<0.02) but no difference was found in exploration of the protected area (i.e. box) and in social affinity. Correspondingly, in both pharmacological experiments vehicle-treated HABs and LABs revealed comparable behavioral differences as the untreated test groups.

The two-way ANOVA (line X treatment) on the behavioral parameter of diazepam-treated animals in the mHB revealed that HABs and LABs differed significantly in risk assessment behavior (stretched attends: F(1,14)=8.25; p<0.02) and anxiety-related behavior (latency board: F(1,94)=5.89; p<0.03 and entries on board: F(1,14)=4.64; p<0.05). In HAB, risk assessment behavior was significantly reduced by acute diazepam-treatment (p<0.01) resulting in an abolishment of the line-difference in vehicle-treated rats. Moreover, acute diazepam treatment abolished group differences in anxiety-related behavior by affecting 'latency board' in HABs (p<0.02) and 'entries on board' in both rat lines.
The two-way ANOVA (line X treatment) on the behavioral parameter of paroxetine-treated animals in the mHB revealed a significant interaction of the two factors only in 'latency hole' (F(1,36)=4.5; p<0.05) with HABs showing a increase in this parameter (p<0.01) resulting in a significant difference between treated rat-lines which could not be observed in vehicle-treated lines. Otherwise, paroxetine-treatment failed to induce behavioral effects in LABs.

In the above described experiments the mHB behavior of untreated rats bred for hyper- and hypo-anxiety, respectively, revealed clear differences in anxiety-related behavior, a finding that corresponds with previous results obtained by different tests of unconditioned anxiety (Henniger et al., 2000; Liebsch et al., 1998a,b). Furthermore, HABs compared with LABs showed no differences in exploration of the protected area (i.e. rearings in the box) or, social affinity. The same behavioral characteristics were found in vehicle-treated animals in the pharmacological experiments. These results demonstrate that the mHB enables to differentially investigate behavioral characteristics in rodents and, thus, to assess the face validity of a psychopathological animal model.

Interestingly, acute treatment with the anxiolytic drug diazepam abolished the line-differences observed in both untreated and vehicle-treated HABs and LABs almost completely. Changes in 'latency board' and 'entries on board' in HABs were induced by diazepam, indicating an anxiolytic action in extremely anxious rats. These observations are in line with the results of previous studies on the effect of diazepam in rats (Fernandez et al., 1996; Liebsch et al., 1998b). In HABs, the anxiolytic action of diazepam was underlined by a concomitant reduction of risk assessment behavior (i.e. stretched attends) while no effect was found in locomotion. Nevertheless, one parameter of anxiety-related behavior (percentage of time spent on the board) revealed no significant treatment effect, suggesting that avoidance behavior towards unprotected areas, representing the selection criterion in HABs and LABs (Liebsch et al., 1998a,b), is extremely stable in these rat lines.
In LABs, at first glance, acute treatment with diazepam seemed to produce an anxiogenic action: Opposing the effects observed in HABs, 'latency board' was rather increased and 'entries on board' were decreased in LABs. However, the concomitant tendency towards reduced locomotion and the lack of changes in risk assessment behavior point towards a sedative rather than an anxiogenic action of diazepam in non-anxious animals. Taken together, these results provide evidence for anxiolytic effects of diazepam in hyper-anxious individuals only but a rather sedative effect in hypo-anxious individuals, thus suggesting the feasibility of the mHB to assess the predictive value of a psychopathological animal model.
Although chronic treatment with the selective serotonin-reuptake inhibitor paroxetine revealed no effects on parameters indicating anxiety of unprotected areas, the abolition of the basal line-difference in risk assessment behavior after chronic treatment with paroxetine indicates a mild anxiolytic action in HABs. This is in accordance with the hypothesis that risk assessment behavior is more sensitive to the effects of atypical anxiolytics, such as paroxetine, than are more traditional indices of anxiety (Griebel et al., 1997). However, recent studies on the behavior of rats in the elevated plus-maze both after chronic treatment with antidepressants (Beaufour et al., 1999) and chronic treatment with the serotonin reuptake-inhibitor fluoxetine (Silva & Brandao, 2000) revealed neither changes in classical indicators of anxiety nor in risk assessment behavior. The observation of treatment-induced changes in risk assessment behavior in the mHB suggests that the stress-reduced characteristic of this test allows to discover more subtle treatment effects than other tests of unconditioned behavior.
Chronic paroxetine treatment induced a marked increase in 'latency hole' in HABs, which - upon first view - suggests that paroxetine slightly reduced the motivation to explore the unprotected area in hyper-anxious animals. Since, however, the number of holes explored remained unaffected by paroxetine treatment, a modulation of the exploratory strategy is the more likely explanation than changes in the motivation to expiore the unprotected area in general. interestingly, in LABs, no treatment-induced behavioral changes were observed, suggesting that chronic paroxetine-treatment is ineffective in non-anxious individuals.

The above experiments clearly establish that the mHB provides a simple test paradigm allowing accurate and subtle differentiation of behavioral profiles.

The mHB represents a combination of a hole board and an open field. Since the mHB allows to maintain the social contact among the animals to be tested, social isolation of the animals is avoided in contrast to previous test paradigms which always excluded social contact to group mates since influences masking the behavior were feared. Additionally, it is possible to assess the need of social contact.

Therefore, this new test paradigm enables to investigate a wide range of behaviors, including anxiety-related behavior, risk assessment behavior, exploration, locomotor activity, and social affinity.

As can be clearly derived from the above it is possible to differentially analyze the basal behavior in rodents and to evaluate behavioral effects induced by different pharmacological treatments under stress-reduced conditions using the mHB test. Behaviors such as anxiety, exploration, and locomotor activity can be dissociated and investigated by thorough monitoring and analysis of behavioral parameters obtained in this behavioral test. Hence, the mHB represents a significant improvement over the prior art, which requires a whole battery of separate tests. The finding that even subtle differentiation of behavioral profiles may be determined by a single simple test is surprising and contrary to the conventional teaching.

The mHB thus provides a simple and expedient screening tool suitable for high throughput screening.

Finally, due to its stress-reduced characteristic by avoiding social separation, the mHB test enables the investigator to evaluate subtle behavioral modulations such as mild changes in anxiety-related behavior or changes in the exploratory motivation.

Thus, the mHB represents an effective tool for high throughput-screening for potential therapeutic agents in preclinical research and for the assessment of genetically induced behavioral effects in particular laboratory animal strains. It is simple and cost-efficient and moreover, the number of laboratory animals needed may be significantly reduced, combining for the first time avoidance of stress due to social partition. It still allows the clear differentiation between the individual behavioral parameters in a single experimental setting, as opposed to conventional paradigms. Thus, for example in the open field paradigm, the locomotor activity cannot be clearly dissociated from exploration. Moreover the test arrangement and experimental procedures employing the mHB of the invention can also be used for motoric tests or habituation tests, as well as for memory and leaming, e.g. by assessing visual and olfactorial discrimination in small laboratory animals, for example by the introduction of food into the hole compartment.
The modified hole board can also be applied for the investigation of effects of innate anxiety on cognitive performance in rodents, as described in Ohl et al., Biological Psychiatry, 2001, submitted for publication, which is hereby included by reference.

### References

Beaufour CC et al. (1999), *Pharmacol Biochem Behav* **62**: 591-599.

Belzung C & Le Pape G. (1994), *Physiol Behav* **56**: 623-628.

Cruz APM et al. (1994), *Pharmacol Biochem Behav* **49**: 171-176.

Escorihuela RM et al. (1999), *Physiol Behav* **67**: 19-26.

Femandez C et al. (1996), *Brain Res* **734**: 236-42.

File SE & Wardill AG (1975), *Psychopharmacologia (Berl.)* **44**: 53-59.

Geyer MA (1996), *Behav Brain Res* **73**: 31-5.

Griebel G et al. (1997), *Pharmacol Biochem Behav* **57**: 817-827.

Henniger MSH et al. (2000), *Behav Brain Res,* in press.

Holsboer F (1995), In: Psychopharmacology: The Fourth Generation of Progress (Bloom F.E. and Kupfer D.J., eds.), New York: Raven Press. pp. 957-968.

Keck ME et al. (1999), *29*^{*th*} *Annual Meeting of the Society of Neuroscience,* No. **64.13** (abstract).

Kelley AE (1993), In: A. Sahgal (Ed.), Behavioural Neuroscience: A practical approach. Oxford, Oxford University Press. pp. 1-21.

Landgraf R et al. (1999), *J Neuroendocrinol* **11:** 405-407.

Liebsch G et al. (1998a), *Behav Brain Res* **94:** 301-310.

Liebsch G et al. (1998b), *Neuropsychopharmacology* **19:** 381-396.

Lister RG (1990), *Pharmacol Ther* **46:** 321-340.

Menard J & Treit D (1999), *Neurosci Biobehav Rev* **23:** 591-613.

Ohl F et al. (1998), *J Neurosci Meth* **81**: 35-40.

Ohl F & Fuchs E (1999), *Cog Brain Res* **7:** 379-387.

Ohl F et al. (2001), Biological Psychiatry, submitted for publication

Rodgers RJ (1997), *Behav Pharmacol* **8**: 477-496.

Rogers RJ et al. (1997), *Braz J Med Biol Res* **30**: 289-304.

Sheldon MH (1968), *Psychol Sci* **11**: 38.

Silva RCB & Brandao ML (2000), *Pharmacol Biochem Behav* **65**: 209-216.

Treit D (1985), *Neurosci Biobehav Rev* **9**: 203-222.

## Claims

1. An arrangement for assessing the behavior of laboratory animals, comprising:
(a) a first compartment for housing a plurality of said laboratory animals;
(b) a second compartment for testing the behavior of one of said plurality of laboratory animals, wherein said second compartment is an open field and is located adjacent to said first compartment, wherein said first and second compartments are separated from each other by a partition which comprises at least one hole for fluid exchange to allow visual and olfactory contact among the animals to be tested; and
(c) a hole board arranged in said second compartment.

2. The arrangement of claim 1, wherein said hole board comprises a plurality of holes arranged in an array.

3. The arrangement of claim 1 or 2, wherein said hole board comprises at least one moveable lid covering a hole of said hole board.

4. The arrangement of claim 3, wherein each of the holes of said hole board are provided with a respective moveable lid.

5. The arrangement of any of claims 1 to 4, wherein said hole board is arranged substantially at the center of said second compartment.

6. The arrangement of any of claims 1 to 5, wherein said open field of said second compartment is provided with a detectable marking dividing said open field into a plurality of fields.

7. The arrangement of claim 6, wherein said detectable marking is a plurality of lines dividing said open field into quadrants.

8. The arrangement of any one of claims 1-7, wherein said partition is transparent, preferably transparent PVC.

9. The arrangement of any of claims 1 to 8, wherein said hole board and said second compartment are made of an opaque, preferably gray, PVC.

10. The arrangement of any of claims 1 to 9, wherein said first compartment is sized about 50 x 50 x 50 cm, said second compartment is sized about 100 x 50 x 50 cm, and said hole board is sized about 60 x 20 x 2 cm.

11. The arrangement of any of claims 1 to 10, further comprising means for automatically detecting the behavior of said laboratory animals.

12. The arrangement of claim 11, wherein said detecting means comprises video means providing a continuous image of said open field, said image being transferred as a video signal to control means for evaluating the behavior of said laboratory animals.

13. The arrangement of claim 12, wherein said control means is a digital computer with software for evaluating and storing the behavior of said laboratory animals.

14. Use of an arrangement according to any one of claims 1-13 for the screening of psychopharmacological behavioral parameters of laboratory animals.

15. Use of an arrangement according to claim 14 for measuring the parameters assigned to at least one emotion selected from the group consisting of anxiety, caution, curiosity, locomotor activity, arousal and social affinity.

16. Use according to claim 14 for the assessment of breeding induced alterations of dimensions of emotionality.

17. Use according to claim 14 for the investigation of learning and memory (cognitive) functions.

18. Use according to claim 14 for the differential investigation of pharmacological effects of agents on the behavior.

19. Use according to any one of claims 14 to 18, wherein the laboratory animals are mice, rats, tree shrews or small primates.

20. Use according to any one of claims 14 to 19 for assessing the behavior in laboratory animals, wherein all group mates after preferably 10 - 60 minutes of habituation in the group department (first compartment) are successively placed in the experimental box (second compartment) preferably for 5 - 10 minutes each measuring the parameters assigned to anxiety, (% time, latency board entries on board, time immobile); indicating exploration related behavior (i.e. curiosity) (holes explored, rearings board, rearings box, latency hole); risk assessment behavior (i.e. caution) (stretched attends); locomotor activity (line crossings); social affinity (latency group contact, time group contact) and physiological arousal (latency grooming, latency defaecation, time grooming, number of defaecations).

## Patentansprüche

1. Anordnung zur Begutachtung des Verhaltens von Labortieren, umfassend:
(a) eine erste Abteilung zur Beherbergung einer Vielzahl der Labortiere;
(b) eine zweite Abteilung zur Prüfung des Verhaltens von einem aus der Vielzahl der Labortiere, wobei die zweite Abteilung ein offenes Feld ist und in Nachbarschaft der ersten Abteilung lokalisiert ist, wobei die erste und zweite Abteilung durch eine Trennwand voneinander getrennt sind, die zumindest ein Loch zum Flüssigkeitsaustausch umfasst, um Sicht- und Geruchskontakt zwischen den zu testenden Tieren zu ermöglichen; und
(c) ein Lochbrett, das in der zweiten Abteilung angeordnet ist.

2. Anordnung nach Anspruch 1, wobei das Lochbrett eine Vielzahl von Löchern umfasst, die in Reihen angeordnet sind.

3. Anordnung nach Anspruch 1 oder 2, wobei das Lochbrett zumindest einen beweglichen Deckel umfasst, der ein Loch des Lochbretts bedeckt.

4. Anordnung nach Anspruch 3, wobei jedes der Löcher des Lochbretts mit einem entsprechenden beweglichen Deckel ausgestattet ist.

5. Anordnung nach einem der Ansprüche 1 bis 4, wobei das Lochbrett im wesentlichen in der Mitte der zweiten Abteilung angeordnet ist.

6. Anordnung nach einem der Ansprüche 1 bis 5, wobei das offene Feld der zweiten Abteilung mit einer nachweisbaren Markierung ausgestattet ist, die das offene Feld in eine Vielzahl von Feldern unterteilt.

7. Anordnung nach Anspruch 6, wobei die nachweisbare Markierung eine Vielzahl von Linien ist, die das offene Feld in Quadranten unterteilen.

8. Anordnung nach einem der Ansprüche 1 bis 7, wobei die Trennwand transparent ist, vorzugsweise transparentes PVC.

9. Anordnung nach einem der Ansprüche 1 bis 8, wobei das Lochbrett und die zweite Abteilung aus einem opaken, vorzugsweise grauen PVC hergestellt sind.

10. Anordnung nach einem der Ansprüche 1 bis 9, wobei die erste Abteilung eine Größe von ungefähr 50 x 50 x 50 cm hat, die zweite Abteilung eine Größe von ungefähr 100 x 50 x 50 cm hat, und das Lochbrett eine Größe von ungefähr 60 x 20 x 2 cm hat.

11. Anordnung nach einem der Ansprüche 1 bis 10, weiterhin umfassend Mittel zum automatischen Nachweis des Verhaltens der Labortiere.

12. Anordnung nach Anspruch 11, wobei das Nachweismittel eine Videovorrichtung umfasst, die ein kontinuierliches Bild des offenen Feldes liefert, wobei das Bild als Videosignal zu einer Kontrollvorrichtung zur Bewertung des Verhaltens der Labortiere übertragen wird.

13. Anordnung nach Anspruch 12, wobei die Kontrollvorrichtung ein digitaler Computer mit Software zum Bewerten und Speichern des Verhaltens der Labortiere ist.

14. Verwendung einer Anordnung nach einem der Ansprüche 1 bis 13 zum Screenen von psychopharmakologischen Verhaltensparametem von Labortieren.

15. Verwendung einer Anordnung nach Anspruch 14 zur Messung der Parameter, die mindestens einem Gefühl zugeordnet sind, das ausgewählt ist aus der Gruppe bestehend aus Angst, Vorsicht, Neugierde, lokomotorischer Aktivität, Wachsamkeit und sozialer Bindung.

16. Verwendung nach Anspruch 14 zur Begutachtung von Aufzucht-induzierten Änderungen der Dimensionen der Emotionalität.

17. Verwendung nach Anspruch 14 zur Untersuchung des Lemens und von (kognitiven) Erinnerungsfunktionen.

18. Verwendung nach Anspruch 14 zur differentiellen Untersuchung der pharmakologischen Wirkung von Stoffen auf das Verhalten.

19. Verwendung nach einem der Ansprüche 14 bis 18, wobei die Labortiere Mäuse, Ratten, Spitzhörnchen oder kleine Primaten sind.

20. Verwendung nach einem der Ansprüche 14 bis 19 zur Begutachtung des Verhaltens von Labortieren, wobei alle Gruppenmitglieder vorzugsweise nach 10-60 Minuten Gewöhnung in der Gruppenabteilung (erste Abteilung) nacheinander in den Experimentalbehälter platziert werden (zweite Abteilung), vorzugsweise für 5-10 Minuten, wobei die der Angst zugeordneten Parameter gemessen werden, (% Zeit, Wartezeit-Brett, Betreten des Bretts, Zeit unbeweglich), die erforschungsverwandtes Verhalten anzeigen (z.B. Neugierde) (untersuchte Löcher, Aufrichten-Brett, Aufrichten-Behälter, Wartezeit-Loch); Gefahrbegutachtungsverhalten (z.B. Vorsicht) (gestreckte Aufwartungen); lokomotorische Aktivität (Linienkreuzungen); soziale Bindung (Wartezeit-Gruppenkontakt, Zeit-Gruppenkontakt) und physiologische Erregung (Wartezeit-Pflege, Wartezeit-Defaekation, Zeit-Pflege, Anzahl der Defaekationen).

## Revendications

1. Agencement pour évaluer le comportement d'animaux de laboratoire, comprenant :
(a) un premier compartiment pour loger une pluralité desdits animaux de laboratoire ;
(b) un deuxième compartiment pour étudier le comportement de l'un de ladite pluralité d'animaux de laboratoire, dans lequel ledit deuxième compartiment est une zone couverte, et est disposé de manière adjacente audit premier compartiment, dans lequel lesdits premier et deuxième compartiments sont séparés l'un de l'autre par une cloison qui comprend au moins un orifice pour l'échange fluidique afin de permettre le contact visuel et olfactif entre les animaux à étudier ; et
(c) un panneau perforé dans ledit deuxième compartiment.

2. Agencement selon la revendication 1, dans lequel ledit panneau perforé comprend une pluralité d'orifices agencés en réseau.

3. Agencement selon l'une quelconque des revendications 1 ou 2, dans lequel ledit panneau perforé comprend au moins un élément de recouvrement amovible recouvrant un orifice dudit panneau perforé.

4. Agencement selon la revendication 3, dans lequel chacun des orifices dans ledit panneau perforé sont fournis avec un élément de recouvrement amovible respectif.

5. Agencement selon l'une quelconque des revendications 1 à 4, dans lequel ledit panneau perforé est agencé sensiblement au centre dudit deuxième compartiment.

6. Agencement selon l'une quelconque des revendications 1 à 5, dans lequel ladite zone couverte dudit deuxième compartiment est fournie avec un marquage visible qui subdivise ladite zone couverte en une pluralité de zones.

7. Agencement selon la revendication 6, dans lequel ledit marquage visible est constitué d'une pluralité de lignes subdivisant ladite zone couverte en quadrants.

8. Agencement selon l'une quelconque des revendications 1 à 7, dans lequel ladite cloison est transparente, de préférence en PVC transparent.

9. Agencement selon l'une quelconque des revendications 1 à 8, dans lequel ledit panneau perforé et ledit deuxième compartiment sont réalisés dans un PVC opaque, de préférence gris.

10. Agencement selon l'une quelconque des revendications 1 à 9, dans lequel ledit premier compartiment mesure environ 50 x 50 x 50 cm, ledit deuxième compartiment mesure environ 100 x 50 x 50 cm, et ledit panneau perforé mesure environ 60 x 20 x 2 cm.

11. Agencement selon l'une quelconque des revendications 1 à 10, comprenant en outre des moyens permettant de détecter automatiquement le comportement desdits animaux de laboratoire.

12. Agencement selon la revendication 11, dans lequel lesdits moyens de détection comprennent des moyens vidéo fournissant une image continue de ladite zone couverte, ladite image étant transférée sous la forme d'un signal vidéo aux moyens de commande pour évaluer le comportement desdits animaux de laboratoire.

13. Agencement selon la revendication 12, dans lequel lesdits moyens de commande sont constitués d'un ordinateur numérique comportant des logiciels pour évaluer et stocker le comportement desdits animaux de laboratoire.

14. Utilisation d'un agencement selon l'une quelconque des revendications 1 à 13, pour sélectionner (ou cribler) les paramètres comportementaux psychopharmacologiques d'animaux de laboratoire.

15. Utilisation d'un agencement selon la revendication 14, permettant de mesurer les paramètres affectés à au moins une émotion choisie dans le groupe comprenant l'anxiété, la prudence, la curiosité, l'activité locomotrice, la fonction d'alerte et l'affinité sociale.

16. Utilisation selon la revendication 14 pour l'évaluation des altérations induites par la reproduction en termes d'émotivité.

17. Utilisation selon la revendication 14 pour l'étude des fonctions (cognitives).d'apprentissage et de mémoire

18. Utilisation selon la revendication 14, pour l'étude différentielle des effets pharmacologiques d'agents sur le comportement.

19. Utilisation selon l'une quelconque des revendications 14 à 18, dans laquelle les animaux de laboratoire sont des souris, rats, toupayes ou petits primates.

20. Utilisation selon l'une quelconque des revendications 14 à 19 pour évaluer le comportement d'animaux de laboratoire, dans lequel tous les représentants des groupes, après de préférence 10 à 60 minutes d'accoutumance dans le département du groupe (premier compartiment), sont ensuite placés dans la boîte expérimentale (deuxième compartiment) de préférence pendant 5 à 10 minutes, en mesurant pour chacun les paramètres affectés à l'anxiété (% temps, latence panneau, accès panneau, temps immobilité) ; indiquant le comportement lié à l'exploration (à savoir la curiosité) (orifices explorés, cabrement panneau, cabrement boîte, latence orifice) ; comportement face à l'évaluation du risque (à savoir prudence) (attitudes tendues) ; activité locomotrice (croisement) ; affinité sociale (latence contact de groupe, durée contact de groupe) et fonction d'alerte physiologique (latence épouillage, latence défécation, temps épouillage, nombre de défécations).
